# EUROPÄISCHE PATENTANMELDUNG

(11) **EP 2 163 231 A2**
(43) Veröffentlichungstag der Anmeldung: **17.03.2010**
(21) Anmeldenummer: 09163733.0
(22) Anmeldetag: 25.06.2009
(51) Int. Cl.: A61G 5/06, A61G 5/04

(54) **Treppensteigvorrichtung**

(30) Priorität: 11.09.2008 DE 102008044516
(71) Anmelder: Ulrich Alber GmbH, 72461 Albstadt-Tailfingen (DE)
(72) Erfinder: Scheck, Franz, 72336, Balingen (DE)
(74) Vertreter: Staudt, Hans-Peter

(57) **Zusammenfassung**

Eine Treppensteigvorrichtung, beispielsweise für Rollstühle, verfügt über mindestens ein Steigelement (15), das auf einer kreisförmigen Bahn bewegbar ist, so dass es mit dem jeweils nächstgelegenen Treppenabsatz einer Treppe in Berührung gelangen und die Treppensteigvorrichtung auf den nächstgelegenen Treppenabsatz heraufheben oder absenken kann, sowie einen Antriebsmotor (2) zur Bereitstellung der Antriebskraft zum Bewegen des mindestens einen Steigelements (15) auf der kreisförmigen Bahn, wobei die Bewegung des mindestens einen Steigelements (15) auf der kreisförmigen Bahn mit einer nicht konstanten Drehgeschwindigkeit erfolgt. Zwischen Antriebsmotor (2) und dem mindestens einen Steigelement (15) ist ein Getriebe (3) angeordnet, das die Drehgeschwindigkeit des mindestens einen Steigelements (15) gegenüber der Drehgeschwindigkeit des Antriebsmotors (2) zyklisch variiert.

## Beschreibung

Die Erfindung betrifft eine Treppensteigvorrichtung gemäß dem Oberbegriff des Patenspruchs 1.

Eine derartige Treppensteigvorrichtung eignet sich für den Transport von Geräten, Gütern und Personen und insbesondere von Rollstühlen zur Beförderung des Rollstuhls zusammen mit einer darin sitzenden Person. Die Treppensteigvorrichtung kann lösbar an einem derartigen Rollstuhl befestigt sein, kann jedoch auch als Steigeinheit an einem Rollstuhl oder einem anderen Beförderungsmittel für Personen oder Gegenstände als Steigeinrichtung fest verbaut vorgesehen sein. Verschiedene Ausführungsformen von Treppensteigvorrichtungen sind beispielsweise aus der DE 297 21 477 U1, der DE 10 2004 043 778 A1 oder der WO 00/12371 A1 bekannt.

Treppen stellen insbesondere für Rollstuhlfahrer und Gehbehinderte ein erhebliches Problem dar. Eine Treppensteigvorrichtung der eingangs genannten Art ermöglicht es beispielsweise, dass Hilfspersonen einen Rollstuhlfahrer oder Gehbehinderten ohne nennenswerte körperliche Anstrengung allein mit Hilfe einer derartigen Treppensteigvorrichtung eine Treppe hinauf oder hinab befördern können. Hierzu kann eine derartige Treppensteigvorrichtung an einem Rollstuhl lösbar befestigt werden, sofern nicht die Treppensteigvorrichtung selbst als Teil des Rollstuhls ausgebildet ist. Zusammen mit dem Rollstuhl wird die Treppensteigvorrichtung dann an den ersten Treppenabsatz herangefahren. Eine Hilfsperson kippt nunmehr die Treppensteigvorrichtung mit angebrachtem Rollstuhl zu sich ins Gleichgewicht. Bei Erreichen der idealen Kippstellung verspürt die Hilfsperson nur noch einen minimalen Druck nach vorne oder nach hinten. Gelangt nunmehr ein Steigelement mit dem nächstgelegenen Treppenabsatz in Berührung, um die Treppensteigvorrichtung auf diesen nächstgelegenen Treppenabsatz heraufzuheben, stellt sich eine Lastwechselreaktion ein, die von der Bedien- beziehungsweise Hilfsperson ausgeglichen werden muss. Je schneller und deutlicher diese Lastwechselreaktionen ausfällt, desto stärker muss ein entsprechender Ausgleich durch die Hilfsperson ausgeführt werden.

Zur Erleichterung der Handhabung einer derartigen Treppensteigvorrichtung wird in der gattungsgemäßen DE 199 12 932 C1 vorgeschlagen, die Steigeinheit der Treppensteigvorrichtung mit unterschiedlichen Antriebsgeschwindigkeiten zu betreiben, wobei die Antriebsgeschwindigkeit kurz vor dem Aufsetzen eines Steigelements auf den nächstgelegenen Treppenabsatz gegenüber einer ersten vorbestimmten Antriebsgeschwindigkeit reduziert wird, so dass ein weiches Aufsetzen erreicht wird, und nach dem Aufsetzen auf dem nächstgelegenen Treppenabsatz wieder erhöht wird, um den Steigvorgang insgesamt zügig durchführen zu können. Durch das weiche Aufsetzen auf den jeweiligen Treppenabsatz wird das Beherrschen von Lastwechselreaktionen durch die Bedienperson wesentlich erleichtert. Zudem wird der Steigvorgang für die Insassen des Rollstuhls schonender.

Bei dieser bekannten Treppensteigvorrichtung wird die Variation der Antriebsgeschwindigkeit des Steigelements auf elektronischem Weg durch eine entsprechende Ansteuerung des Antriebsmotors bewirkt. Dieser läuft entsprechend dieser elektronischen Ansteuerung während des Steigzyklus mit unterschiedlichen Geschwindigkeiten. Dies stellt allerdings erhöhte Anforderungen an einen elektrischen Antriebsmotor.

Der Antriebsmotor der aus der DE 199 12 932 C1 bekannten Treppensteigvorrichtung muss, um das wünschenswerte sanfte Aufsetzen zu ermöglichen, kurz vor dem Aufsetzen eines Steigelementes beziehungsweise eines Hubelementes auf einem Treppenabsatz sowie unmittelbar danach mit möglichst geringer Drehgeschwindigkeit betrieben werden, um die zuvor erwähnte Lastwechselreaktion zu minimieren und ein schonendes Aufsetzen zu gewährleisten. Dies bedeutet allerdings, dass bei einer niedrigen Drehzahl des elektrischen Antriebsmotors und somit genau dann, wenn der Antriebsmotor bauartbedingt nur ein eher niedriges Drehmoment abgeben kann, durch den bei Einleitung des Hubvorgangs abrupten Kraftanstieg ein besonders hoher Drehmomentbedarf gegeben ist. Ein derartiger Elektromotor muss daher mit besonders hohen Drehmomentreserven ausgestattet sein.

Der Erfindung liegt das technische Problem zugrunde, eine Treppensteigvorrichtung gemäß dem Oberbegriff des Patentanspruchs 1, das heißt eine Treppensteigvorrichtung, beispielsweise für Rollstühle, mit mindestens einem Steigelement, das auf einer kreisförmigen Bahn bewegbar ist, so dass es mit dem jeweils nächstgelegenen Treppenabsatz einer Treppe in Berührung gelangen und die Treppensteigvorrichtung auf den nächstgelegenen Treppenabsatz heraufheben oder absenken kann, die einen Antriebsmotor zur Bereitstellung der Antriebskraft zum Bewegen des mindestens einen Steigelements auf der kreisförmigen Bahn aufweist, wobei die Bewegung des mindestens einen Steigelements auf der kreisförmigen Bahn mit einer nicht konstanten Drehgeschwindigkeit erfolgt, so auszuführen, dass der Antrieb möglichst effizient und gleichzeitig bedienerfreundlich ausgeführt werden kann.

Die Lösung dieser Aufgabe ist in Patentanspruch 1 definiert. Vorteilhaftere Ausführungsformen sind in den Unteranprüchen angegeben.

Erfindungsgemäß ist demnach zwischen dem Antriebsmotor und dem mindestens einem Steigelement ein Getriebe angeordnet, dass die Drehgeschwindigkeit des mindestens einen Steigelements gegenüber der Drehgeschwindigkeit des Antriebsmotors zyklisch variiert.

Das Steigelement bewegt sich auf einer Kreisbahn, so dass es einfach und in vorteilhafter Weise an einem Exzenterarm gelagert werden kann. Die zyklische Variation der Drehgeschwindigkeit des mindestens einen Steigelements erfolgt bei der erfindungsgemäßen Treppensteigvorrichtung durch Zwischenschaltung eines Getriebes, das die Übersetzung zyklisch ändert. Hierdurch kann der Antriebsmotor, der vorzugsweise als Elektromotor ausgeführt ist, mit konstanter oder zumindest im wesentlichen konstanter Drehgeschwindigkeit betrieben und trotzdem eine zyklische Variation der Drehgeschwindigkeit des Steigelements verwirklicht werden. Unerwünschte Drehmomentspitzen in einem Betriebsbereich, bei dem der Motor nicht sein maximales Drehmoment abgeben kann, werden hierdurch vermieden.

Grundsätzlich ist als derartiges Getriebe jedes Getriebe geeignet, dass eine Variation des Übersetzungsverhältnisses ermöglicht. Vorzugsweise sollte die Übersetzungsänderung kontinuierlich, das heißt nicht in Stufen erfolgen. Dies kann beispielsweise durch entsprechende hydraulische Getriebe, beispielsweise sogenannte Wandlergetriebe, und insbesondere durch hierfür geeignete mechanische Getriebe erfolgen, beispielsweise ein Kreuzgelenk, ein Koppelgetriebe, ein Kettengetriebe mit Unrundkettenrädern, ein Zahnriemengetriebe mit Unrundzahnriemenrädern, ein Kurven-Rollensterngetriebe oder ein Kurvengetriebe.

Bei einer besonders bevorzugten Ausführungsform der Treppensteigvorrichtung mit mechanischem Getriebe ist das Getriebe als Unrundzahnradgetriebe ausgeführt. Eine besonders exakte Anpassung an einen gewünschten Drehgeschwindigkeitsverlauf lässt sich dadurch erreichen, dass zwei Unrundzahnräder mit unterschiedlichen Wälzkurven verwendet werden. Unter Wirtschaftlichkeitsaspekten können allerdings auch zwei Unrundzahnräder mit gleicher Wälzkurve verwendet werden. Diese Unrundzahnräder können mit zueinander gespiegelten und gedrehten, d.h. spiegelgleichen Wälzkurven ausgeführt sein, wobei diese Getriebe als Typ Mirror bezeichnet werden, oder mit zueinander um einen bestimmten Winkel verdrehten Wälzkurven zur Deckung gebracht sein, wobei diese Getriebe als Typ Twin bezeichnet werden.

Eine Feinanpassung des Drehgeschwindigkeitsverlaufs an einen gewünschten Sollwert kann dadurch erreicht werden, dass die durch das Unrundgetriebe bewirkte zyklische Drehgeschwindigkeitsänderung des Steigelements überlagert wird mit einer zyklisch variierten Drehgeschwindigkeit des Antriebsmotors. Da in diesem Fall die Variation der Drehgeschwindigkeit des Antriebsmotors wesentlich geringer ausfallen kann als bei dem eingangs genannten Stand der Technik, fallen die diesbezüglichen Nachteile nicht ins Gewicht.

Die Erfindung wird im Folgenden anhand eines bevorzugten Ausführungsbeispiels in Verbindung mit den Zeichnungen erläutert.

### In den Zeichnungen zeigen:

Fig. 1 eine Schnittdarstellung einer Treppensteigvorrichtung in einer Seitenansicht,
Fig. 2 eine Vorderansicht der Treppensteigvorrichtung gemäß Fig. 1 in gleicher Stellung, wobei die Darstellung Fig. 2 ebenfalls teilweise im Schnitt gehalten ist,
die Fig. 3 und 4 Darstellungen der Treppensteigvorrichtung gemäß Fig. 1, in Seiten- und Vorderansicht, in einer ersten Stellung bei Anfahrt an eine Treppenstufe,
die Fig. 5 und 6 eine Darstellung gemäß Fig. 3 und 4, wobei die als Rad ausgeführten Steigelemente um circa 30° im Uhrzeigersinn gedreht sind, so dass das Gehäuse auf der Treppe aufliegt,
die Fig. 7 und 8. eine den Fig. 5 und 6 entsprechende Darstellung, wobei die Räder im Uhrzeigersinn mit höherer Drehzahl und niedrigem Abtriebsmoment weiter gedreht sind,
die Fig. 9 und 10 eine den Fig. 7 und 8 entsprechende Darstellung, wobei die Räder mit nunmehr langsamer Drehzahl und hohem Abtriebsmoment soweit weiter gedreht sind, dass sie auf dem oberen Treppenabsatz aufgesetzt sind und nunmehr das Gehäuse unter Leistung von Hubarbeit nach oben ziehen können,
die Fig. 11 und 12 eine den Fig. 9 und 10 entsprechende Darstellung, wobei das Gehäuse weiter nach oben gezogen wird und in dieser Stellung das höchste Lastmoment bei geringster Drehzahl anliegt, so dass der Antrieb sein größtes Abgabemoment aufweist,
die Fig. 13 und 14 eine den Fig. 11 und 12 entsprechende Darstellung, wobei das Gehäuse auf der oberen Treppe angelangt ist,
die Fig. 15 die Prinzipskizze eines Unrundketten-/Zahnriemengetriebes mit Darstellung einer möglichen Übersetzungsvariation,
die Fig. 16 die Prinzipskizze eines Rollen-/Rollensterngetriebes mit Darstellung einer möglichen Drehzahlvariation,
die Fig. 17 die Prinzipskizze eines Kurvengetriebes,
die Fig. 18 die Prinzipskizze eines Kreuzgelenks mit Darstellungen möglicher Drehzahlvariationen in Abhängigkeit eines Rotationswinkels β,
die Fig. 19 die Prinzipskizze eines Koppelgetriebes,
Fig. 20 die Prinzipskizze eines Unrundzahnradgetriebes mit Darstellung einer möglichen Drehzahlvariation und
Fig. 21 die Kurven eines theoretisch idealen Übersetzungsverhältnisses und eines mit einem Unrundzahnradgetriebe praktisch realisierten Übersetzungsverhältnisses.

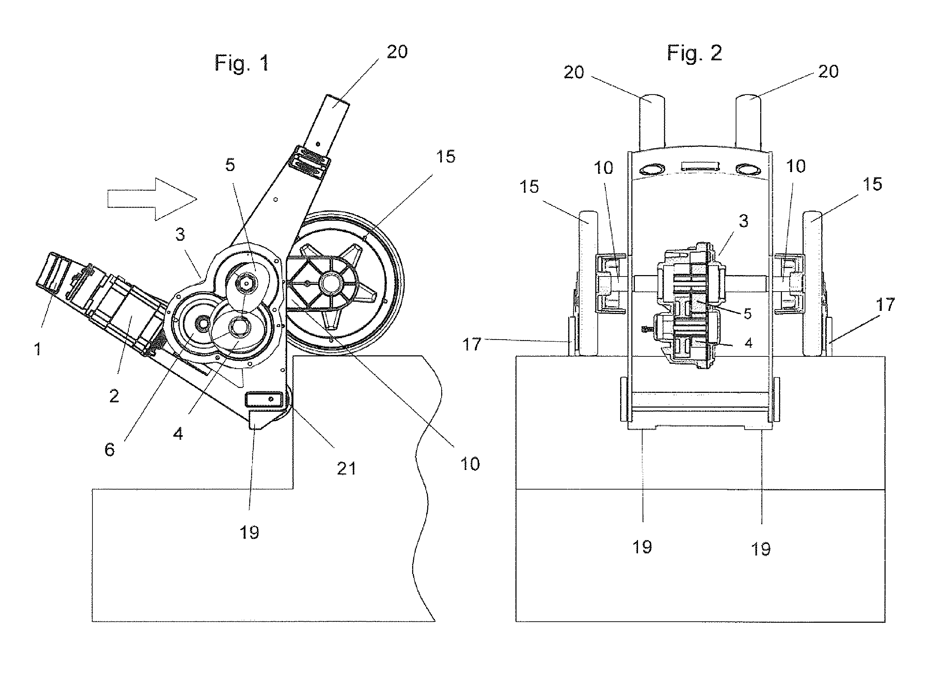

Die Figuren 1 und 2 zeigen, teilweise im Schnitt gehalten, Fig. 1 in einer Seitenansicht und Fig. 2 in einer Draufsicht, den Antriebsteil einer Ausführungsform einer erfindungsgemäßen Treppensteigvorrichtung. In den Figuren nicht dargestellt sind insbesondere Befestigungsmittel zum lösbaren Befestigen der Treppensteigvorrichtung an einem Rollstuhl sowie Griffenden und Bedienelemente, mit denen eine Bedienperson bzw. Hilfsperson des Rollstuhlfahrers die Treppensteigvorrichtung handhaben und bedienen kann. In den Zeichnungen dargestellt sind diesbezüglich lediglich die unteren Enden von Bedienungsstangen 20, an deren oberen Enden entsprechende Bediengriffe und Bedienungselemente nicht gezeigt angebracht sind.

In einem Gehäuse 1 sind ein elektrischer Antriebsmotor 2 und ein Unrundzahnradgetriebe 3 mit einem Antriebs-Unrundzahnrad 4 und einem Abtriebs-Unrundzahnrad 5 angeordnet. Das Drehmoment des Antriebsmotors 2 wird über ein Zwischenzahnrad 6 an das Antriebs-Unrundzahnrad 4 abgegeben, welches sich mit dem Abtriebs-Unrundzahnrad 5 in Eingriff befindet. Mit dem Abtriebs-Unrundzahnrad 5 drehfest verbunden sind zwei Exzenterarme 10, an denen jeweils ein Steigelement 15 in Form eines Laufrades 15 angebracht ist. Die beiden Laufräder 15 sind an den Außenseiten der Treppensteigvorrichtung angebracht, wodurch sich eine stabile Auflage ergibt. Es versteht sich, dass statt der zwei seitlich angebrachten Laufräder 15 auch ein zentral angeordnetes einzelnes Steigelement zur Durchführung des Steigvorgangs ausreichend sein kann.

An jedem Laufrad 10 ist ein Bremsrad 17 angeordnet, welches in an sich bekannter Weise dafür Sorge trägt, dass das Laufrad 10 bei Bedarf gegen unerwünschtes Verdrehen gesperrt ist, sofern nicht das Bremsrad 17 ebenfalls in ausreichendem Maße Bodenkontakt hat. Hierdurch wird bei bestimmten Steigzuständen ein unbeabsichtigtes Wegrollen der Treppensteigvorrichtung verhindert.

Aus der Schnittdarstellung gemäß Fig. 1 ist ersichtlich, dass sich die Übersetzungsverhältnisse beim Drehen des Unrundzahnradgetriebes 3 kontinuierlich ändern. Die in Fig. 1 in Seitenansicht bzw. in Fig. 2 in Frontalansicht gezeigte Stellung ist diejenige Betriebsstellung, in der bei konstanter Drehzahl des Antriebsmotors 2 das höchste Abtriebsdrehmoment bereitgestellt wird und dementsprechend die Abtriebsdrehzahl am geringsten ist.

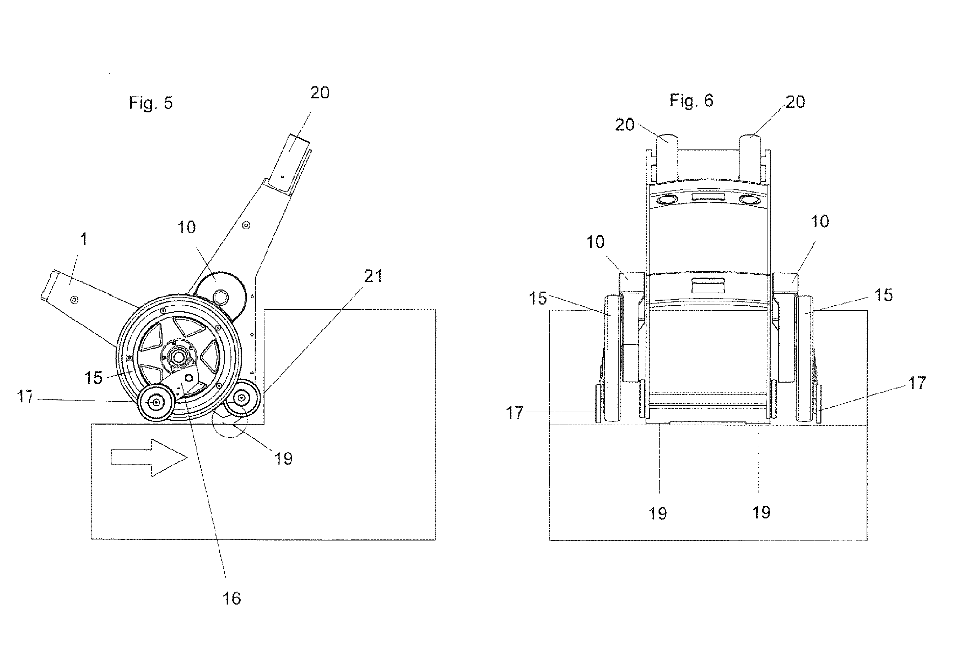

Der Steigvorgang über eine Stufe wird im Folgenden anhand der Fig. 5 bis 14 erläutert. Die Fig. 5 bis 14 entsprechen im Wesentlichen den Fig. 1 und 2, sind jedoch nicht im Schnitt ausgeführt.

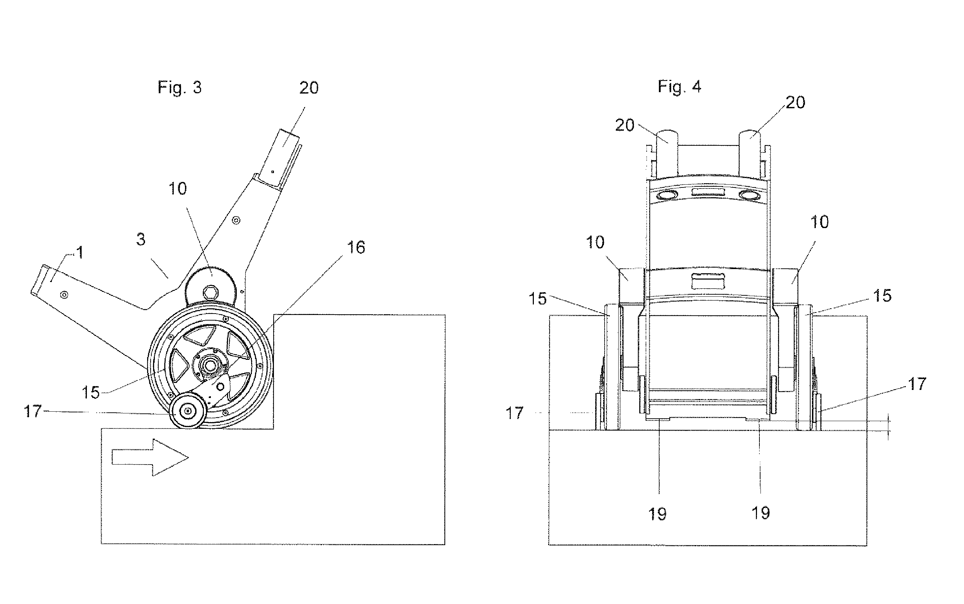

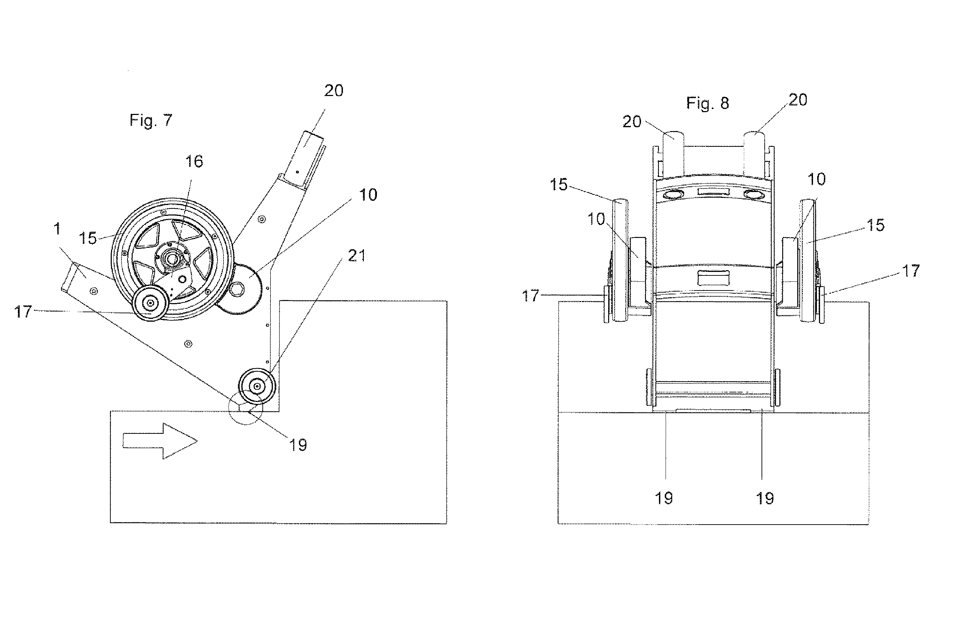

Die Darstellungen in den Fig. 3 und 4 zeigen die Treppensteigvorrichtung nach Anfahrt an eine Treppe. Das Bremsrad 17 und der Bremslenker 16 befinden sich in einer Position, in der das Laufrad 15 frei rollen kann. Die Treppensteigvorrichtung weist eine Bodenfreiheit T auf, welche einen ausreichenden Abstand von zwei entsprechend ausgebildeten Aufsetzpunkten 19 zur unteren Treppenstufe gewährleistet. Zur Verdeutlichung der Berührung des Aufsetzpunktes 19 ist dieser in den Fig. 5 und 7 durch einen ihn umgebenden Kreis hervorgehoben. Dieser Kreis ist nicht Bestandteil der Vorrichtung.

An der Stirnfläche der Stufe liegt ein Gleitrad 21 an, das ein problemloses Hochgleiten der Treppensteigvorrichtung ermöglicht.

Die Fig. 5 und 6 zeigen die Treppensteigvorrichtung in einer Betriebsstellung, in der die Exzenterarme 10 sich gegenüber der Stellung in den Fig. 3 und 4 um circa 30 Grad im Uhrzeigersinn gedreht haben. In dieser Stellung sitzt das Gehäuse 1 mit seinen Aufsetzpunkten 19 auf der unteren Treppenstufe auf. Das Laufrad 15 ist soweit angehoben, dass das Bremsrad 17 seinen Bodenkontakt verloren und sich der Bremslenker 16 in einer Stellung befindet, in der er eine unerwünschte Drehung des Laufrades 15 sperrt.

Die Fig. 7 und 8 zeigen die Treppensteigvorrichtung in einer gegenüber den Fig. 5 und 6 weiter verdrehten Stellung der Exzenterarme 10. In diesem Bereich ist die Drehgeschwindigkeit des Abtriebs-Unrundzahnrades 5 und damit die Drehgeschwindigkeit der Exzenterarme 10 hoch. Hierdurch wird die Totzeit zwischen dem Abheben der Laufräder 15 von der unteren Stufe und dem späteren Aufsetzen der Laufräder 15 auf der oberen Stufe in vorteilhafter Weise kurz gehalten. Da in diesem Bereich keine Hubarbeit zu leisten ist, ist das durch die hohe Drehzahl bewirkte geringe Abtriebsmoment unproblematisch.

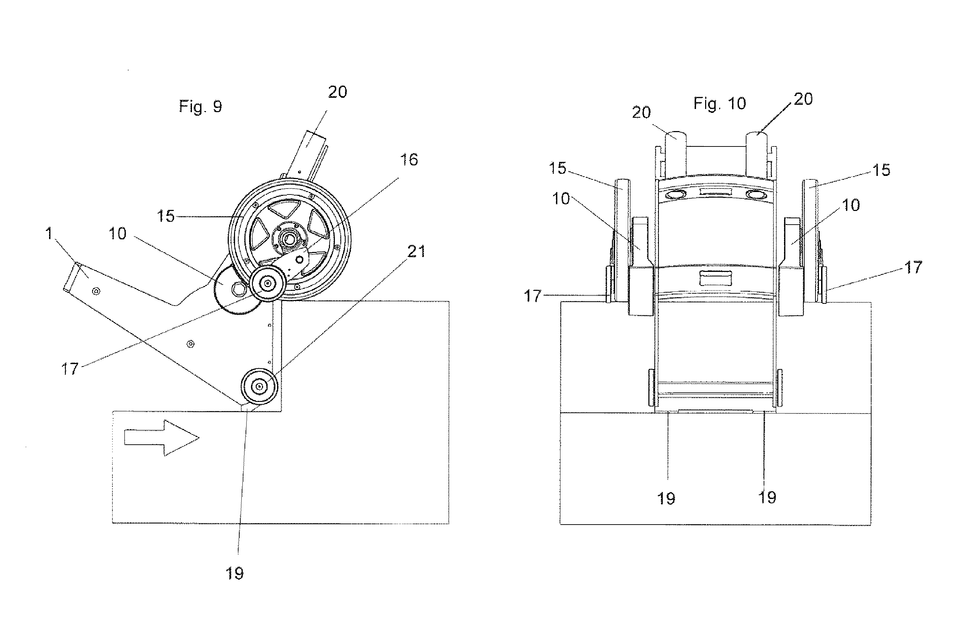

Die Fig. 9 und 10 zeigen die Stellung der Treppensteigvorrichtung in dem Moment, in dem die Laufräder 15 gerade auf der oberen Stufe aufgesetzt haben. Die Bremsräder 17 haben in dieser Stellung noch keinen Kontakt zur oberen Stufe und dementsprechend befinden sich die Bremslenker 16 noch in einer Stellung, die ein unerwünschtes Rollen der Laufräder 15 verhindern. Ein ungewolltes Nachvornedrehen der Laufräder 15 wird somit verhindert. In der in den Fig. 9 und 10 gezeigten Stellung ist die Drehgeschwindigkeit des Abtriebs-Unrundzahnrades 5 und damit der Exzenterarme 10 langsam, wodurch sich ein sachtes Aufsetzen der Laufräder 15 auf der oberen Treppenstufe ergibt. Gleichzeitig wird durch die geringe Drehzahl ein hohes Abtriebsmoment bereitgestellt, dass es ermöglicht, die Hubarbeit beim Hochziehen des Gehäuses 1 und dem daran befestigten Rollstuhl nebst Insasse (nicht gezeigt) zu bewirken.

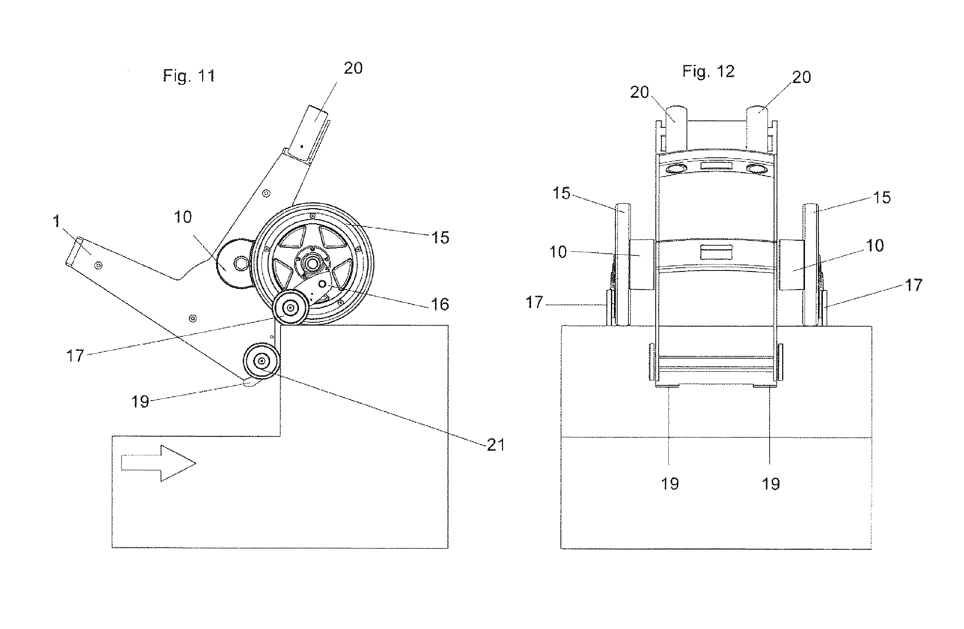

Die Fig. 11 und 12 zeigen eine Betriebsstellung, in der die Treppensteigvorrichtung gegenüber der Stellung in den Fig. 9 und 10 angehoben ist. Die Exzenterarme 10 befinden sich in waagerechter Stellung, wodurch sich ein maximaler Hebelarm ergibt. Dementsprechend liegt das höchste Lastmoment an. Das Unrundgetriebe 3 ist so ausgelegt, dass sich in dieser Stellung eine besonders geringe Drehzahl, je nach Auslegung sogar die geringste Drehzahl auf der Abtriebsseite ergibt, so dass gleichzeitig das größte Abgabemoment bereitgestellt werden kann.

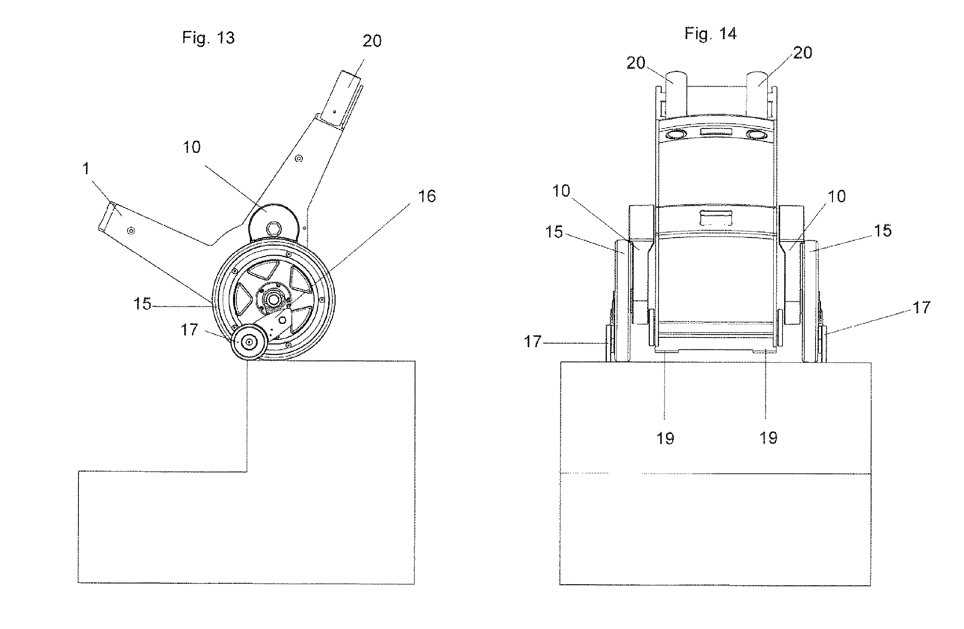

Die Fig. 13 und 14 zeigen die Treppensteigvorrichtung in einer Stellung, in der das Gehäuse 1 vollständig auf die obere Treppe heraufgezogen worden ist, die Bremsräder 17 in ausreichendem Maße Kontakt mit der Oberfläche der oberen Treppenstufe haben, um die Bremslenker 16 in eine Position zu bringen, in der die Laufräder 15 gerollt werden können, und die Treppensteigvorrichtung in der Darstellung gemäß Fig. 13 nach rechts gezogen werden kann, um entweder eine weitere Stufe (nicht gezeigt) zu erklimmen oder von der unteren Stufe weggefahren zu werden. Sollte der Treppensteiger irrtümlich oder unbeabsichtigt in der Darstellung gemäß Fig. 13 nach links verfahren werden, würden zunächst die Bremsräder 17 über die Stufenkante hinausgeschoben werden und nach unten absinken, wodurch die Bremslenker 16 wiederum eine Stellung einnehmen würden, in der ein Rollen der Laufräder 15 nach links verhindert wird.

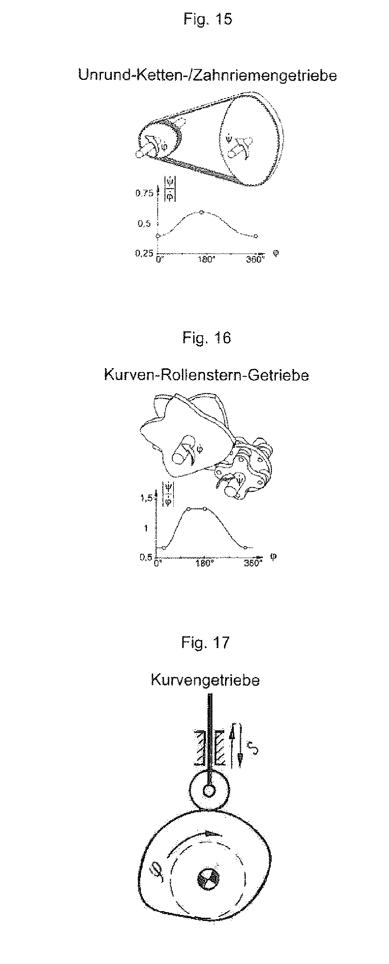

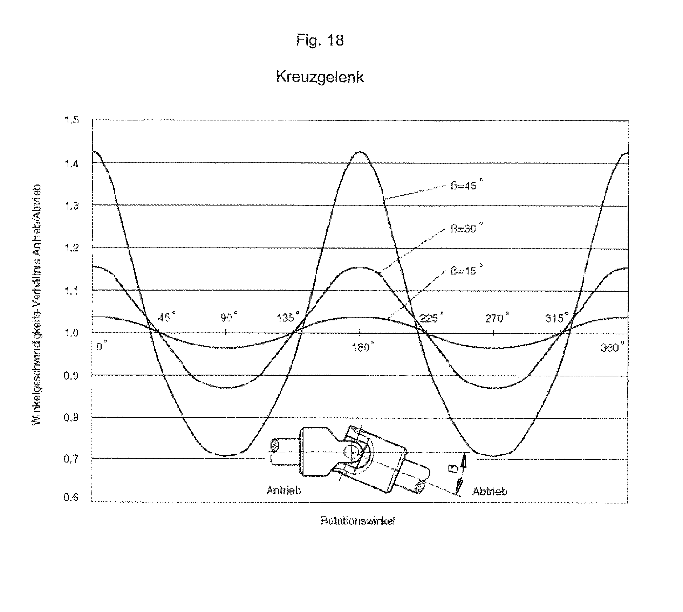

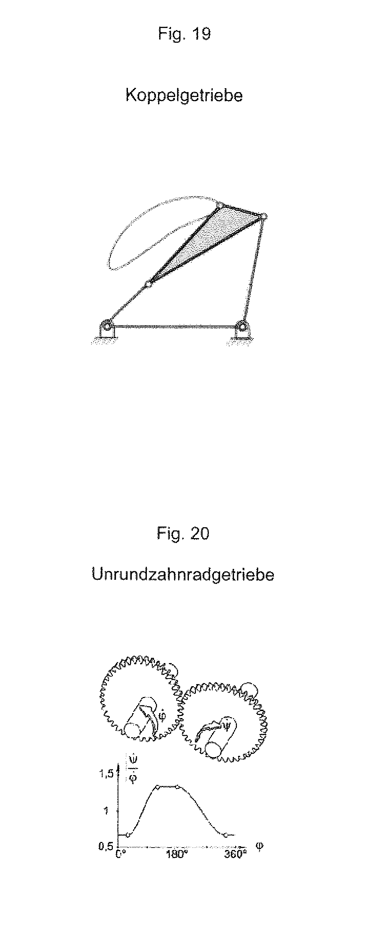

Die Fig. 15 bis 20 zeigen Alternativen zu dem Unrundzahnradgetriebe 3. Diese Alternativen sind lediglich als Prinzipskizzen dargestellt und umfassen gemäß Fig. 15 ein Unrund-Ketten-/Zahnriemengetriebe, gemäß Fig. 16 ein Kurven-Rollenstern-Getriebe, gemäß Fig. 17 ein Kurvengetriebe, gemäß Fig. 18 ein Kreuzgelenk, gemäß Fig. 19 ein Koppelgetriebe und gemäß Fig. 20 eine weitere Ausführungsform eines Unrundzahnradgetriebes.

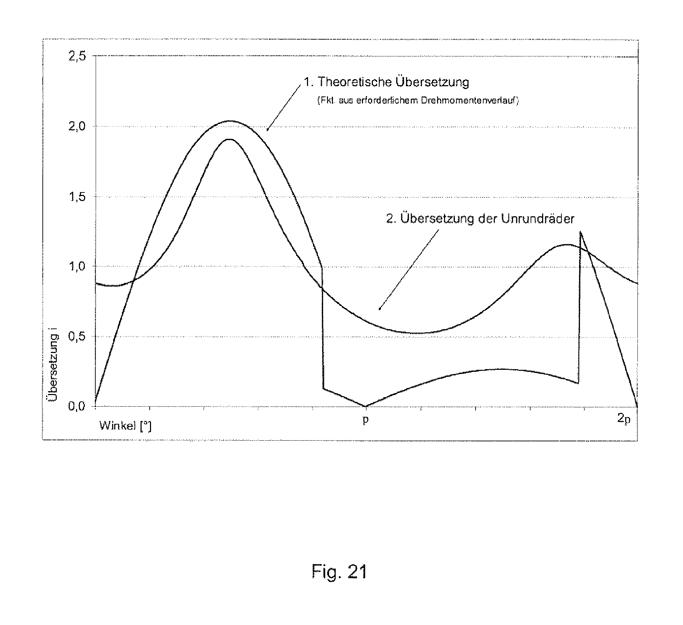

Fig. 21 zeigt ein Diagramm mit zwei Kurven, wobei Kurve 1 eine theoretisch wünschenswerte Übersetzungskurve darstellt, welche sich aus dem erforderlichen Drehmomentverlauf und einem wünschenswerten Geschwindigkeitsverlauf ergibt. Die Kurve 2 zeigt die Übersetzung, die durch die Unrundzahnräder 4, 5 des Unrundzahnradgetriebes 3 bereitgestellt wird. Ersichtlich wird hiermit bereits eine hervorragende Annäherung an einen idealen Drehmoment- und Drehgeschwindigkeitsverlauf erreicht. Weitere Anpassungen können durch eine überlagerte, von einer elektronischen Steuereinrichtung (nicht gezeigt) bewirkte Drehzahlvariation des Antriebsmotors 2 erreicht werden. Es versteht sich, dass hierbei die Drehzahl des Antriebsmotors 2 nur geringfügig variiert werden muss, so dass die üblicherweise mit einer deutlichen Drehzahlvariation des Antriebsmotors auftretenden Nachteile nicht ins Gewicht fallen.

## Patentansprüche

1. Treppensteigvorrichtung mit mindestens einem Steigelement (15), das auf einer kreisförmigen Bahn bewegbar ist, so dass es mit dem jeweils nächstgelegenen Treppenabsatz einer Treppe in Berührung gelangen und die Treppensteigvorrichtung auf den nächstgelegenen Treppenabsatz heraufheben oder absenken kann,
mit einem Antriebsmotor (2) zur Bereitstellung der Antriebskraft zum Bewegen des mindestens einen Steigelements (15) auf der kreisförmigen Bahn,
wobei die Bewegung des mindestens einen Steigelements (15) auf der kreisförmigen Bahn mit einer nicht konstanten Drehgeschwindigkeit erfolgt,
**dadurch gekennzeichnet, dass**
zwischen Antriebsmotor (2) und dem mindestens einen Steigelement (15) ein Getriebe angeordnet ist, das die Drehgeschwindigkeit des mindestens einen Steigelements (15) gegenüber der Drehgeschwindigkeit des Antriebsmotors (2) zyklisch variiert.

2. Treppensteigvorrichtung nach Anspruch 1, **dadurch gekennzeichnet, dass** das Getriebe ein mechanisches Getriebe ist.

3. Treppensteigvorrichtung nach Anspruch 2, **dadurch gekennzeichnet, dass** das Getriebe ein Kreuzgelenk, ein Koppelgetriebe, ein Kettengetriebe mit Unrundkettenrädern, ein Zahnriemengetriebe mit Unrundzahnriemenrädern, ein Kurven-Rollensterngetriebe oder ein Kurvengetriebe ist.

4. Treppensteigvorrichtung nach Anspruch 1, **dadurch gekennzeichnet, dass** das Getriebe ein mechanisches Getriebe, nämlich ein Unrundzahnradgetriebe (3) ist.

5. Treppensteigvorrichtung nach Anspruch 4, **dadurch gekennzeichnet, dass** das Unrundgetriebe (3) zwei Unrundzahnräder (4,5) mit unterschiedlichen Wälzkurven aufweist.

6. Treppensteigvorrichtung nach Anspruch 4, **dadurch gekennzeichnet, dass** das Unrundgetriebe (3) zwei Unrundzahnräder (4,5) mit gleicher Wälzkurve aufweist.

7. Treppensteigvorrichtung nach Anspruch 6, **dadurch gekennzeichnet, dass** die Unrundzahnräder (4,5) mit zueinander gespiegelten Wälzkurven angeordnet sind.

8. Treppensteigvorrichtung nach Anspruch 6, **dadurch gekennzeichnet, dass** die Unrundzahnräder (4,5) mit zueinander verdrehten Wälzkurven angeordnet sind.

9. Treppensteigvorrichtung nach einem der vorstehenden Ansprüche, **dadurch gekennzeichnet, dass** der Antriebsmotor (2) mit zyklisch variablen Drehgeschwindigkeiten betreibbar ist,
wobei sich die durch die Variation der Drehgeschwindigkeiten des Antriebsmotors (2) bedingten Drehgeschwindigkeitsänderungen des mindestens einen Steigelements (15) und die durch das Getriebe bedingten Variationen der Drehgeschindigkeit des mindestens einen Steigelements (15) überlagern.

10. Treppensteigvorrichtung nach einem der vorstehenden Ansprüche, **dadurch gekennzeichnet, dass** zwei Steigelemente (15) vorgesehen sind.

11. Treppensteigvorrichtung nach einem der vorstehenden Ansprüche, **dadurch gekennzeichnet, dass** die Steigelemente (15) an Exzenterarmen (10) angelenkte Laufräder (15) sind.

12. Treppensteigvorrichtung nach einem der vorstehenden Ansprüche, **dadurch gekennzeichnet, dass** die Treppensteigeinrichtung eine Treppensteigeinrichtung für Rollstühle ist.
